# EUROPEAN PATENT SPECIFICATION

(11) **EP 3 214 330 B1**
(45) Date of publication and mention of the grant of the patent: **11.08.2021**
(21) Application number: 16157980.0
(22) Date of filing: 01.03.2016
(51) Int. Cl.: F16C 33/66, F16C 35/04, F16C 19/00, F16C 33/78, F16C 33/80

(54) **OIL-LUBRICATED BEARING ASSEMBLY FOR SUPPORTING A ROTATING SHAFT**
ÖLGESCHMIERTE LAGERANORDNUNG ZUR STÜTZUNG EINER DREHWELLE
ENSEMBLE DE PALIER LUBRIFIÉ À L'HUILE DESTINÉ À SUPPORTER UN ARBRE ROTATIF

(43) Date of publication of application: 06.09.2017
(73) Proprietor: SNR Wälzlager GmbH, 33719 Bielefeld (DE)
(72) Inventor: Arns, Christian, 57482 Wend (DE); Berger, Christoph, 40591 Düsseldorf (DE); Hermann, Waldemar, 33100 Paderborn (DE)
(74) Representative: Alatis

(56) References cited:
- EP-A1- 0 350 472
- EP-A1- 2 881 261
- DE-U1-202008 002 709
- GB-A- 1 101 535
- JP-A- 2007 276 022
- US-A- 2 210 705
- US-A- 3 951 783
- US-A- 5 246 087
- US-A- 5 322 373
- US-A1- 2013 175 765

## Description

### TECHNICAL FIELD OF THE INVENTION

The present invention relates to an oil-lubricated bearing assembly for supporting shaft protruding from a machine housing.

### BACKGROUND ART

A pedestal bearing housing for a rolling or sliding bearing is disclosed in AU690061A. The housing has a substantially cylindrical internal bearing seat enclosed in a main body and intended to accommodate an outer race ring of the bearing. The housing further comprises a bearing housing foot member supporting the main body and having wall members depending from the main body forming a substantially quadrangular shell-like outer foot structure, with the end side of the wall members remote from the main body intended to be fitted to a planar base substantially parallel to the bearing axis. When such a pedestal bearing housing is used for supporting a rotating shaft protruding from through hole in a wall of a machine casing, it is necessary to provide a ledge protruding from the wall of the machine casing in the vicinity of the through hole to support the pedestal bearing housing. The ledge is usually welded to the wall. A seal must be provided between the through hole and the shaft inside the casing. The resulting assembly is bulky.

An oil-lubricated bearing assembly with the features of the preamble of claim 1 for supporting a rotating shaft is known from US 5 322 373. The oil-lubricated bearing assembly comprises a tubular housing body defining a reference axis, the housing body surrounding an axial cavity and a sump formed as a radial extension of the axial cavity.

### SUMMARY OF THE INVENTION

The invention aims to provide compact oil-lubricated bearing assembly for supporting shaft protruding from a machine housing.

According to a first aspect of the invention, there is provided an oil-lubricated bearing assembly for supporting a rotating shaft with respect to a support member, comprising:
- a tubular housing body defining a reference axis, the housing body surrounding an axial through cavity, the housing having an annular bearing seat facing radially inwards within the through cavity,
- a bearing received in the through cavity of the housing body, the bearing having at least one outer race ring fitted into the bearing seat,
- two annular seal assemblies spaced apart from one another so as to define a sealed inner space between the two annular seal assemblies, wherein the sealed inner space includes a sump and the bearing is located within the sealed inner space; and
- a mounting flange integral with the housing body and protruding radially from the housing body, the mounting flange being provided with axial through holes extending in the axial direction for fixing the housing body to a wall of the support member, which extends perpendicularly to the reference axis, and
- a housing cover with a through axial hole, the housing cover being releasibly fixed at an axial open end of the housing body, the mounting flange being closer to an opposed axial open end of the housing body than to the housing cover, wherein one of the annular seal assemblies is at least partially received within the axial through hole of the housing cover, wherein the annular bearing seat is located axially between the mounting flange and the sump so that the sump is more remote from the wall of the support member than the bearing when the housing body is fixed to the wall of the support member, and the sump is formed in the housing body such that an axial end of the sump is closed by the housing cover.

The mounting flange and its axial through holes make it possible to attach the housing body to a wall.

According to a preferred embodiment, the mounting flange is annular. The annular mounting flange surrounds the reference axis. A sealing gasket can be inserted between the oil-lubricated bearing assembly and the wall of the support member. Hence, the through hole of the wall of the support member through which the rotating shaft extends can be completely sealed and it is possible to dispense with an inner sealing between the rotating shaft and the wall of the support member.

Preferably, the mounting flange has a planar surface perpendicular to the reference axis. This planar, preferably annular surface is a contact surface for the wall of the support member.

According to one embodiment, the mounting flange has a planar surface perpendicular to the reference axis.

The oil-lubricated bearing assembly of any one of the preceding claims, wherein the mounting flange protrudes radially from an axial end of the housing body.

Preferably, at least one of the two annular seal assemblies include a labyrinth seal. As is well known in the art, labyrinth seals on rotating shafts provide a non-contact sealing action by controlling the passage of oil through a variety of chambers by centrifugal motion, as well as by the formation of controlled vortices. At higher rotation speeds, centrifugal motion forces the oil towards the outside and therefore away from any passages. Oil that has escaped the main chamber becomes entrapped in a labyrinth chamber, where it is forced into a vortex-like motion. This acts to prevent its escape, and also acts to repel any other fluid. Because these labyrinth seals are non-contact, they do not wear out.

According to a preferred embodiment, at least one of the annular seal assemblies includes a support ring that bears axially against an inner shoulder of the through cavity. Preferably this is the case for the sealing assembly closer to the mounting flange.

According to an embodiment, the housing body is provided with at least one supply hole for at least partially filling the inner space with oil. Preferably, more than one hydraulic socket are provided, e.g. at least one hydraulic socket between the bearing seat and each of the axial ends of the housing body. The hydraulic sockets can be used as pressure compensation sockets and at least one of them as supply port.

Preferably, housing body is in one piece or in two parts, each extending from one axial end to the other. Preferably, the housing body is made of steel or cast-iron.

According to another aspect of the invention, there is provided a rotating machine comprising a machine casing, a rotating shaft defining a revolution axis of the rotating machine, the rotating shaft extending through a through hole in a wall of the machine casing, wherein the rotating machine is provided with an oil-lubricated bearing assembly according to one of the preceding claims fixed to the wall the casing, wherein the bearing is mounted on the shaft, the mounting flange bears against the wall and fastening elements are engaged in the axial through holes of the mounting flange and in corresponding holes of wall of the machine casing to fix the housing body of the oil-lubricated bearing assembly to the wall.

### BRIEF DESCRIPTION OF THE FIGURES

Other advantages and features of the invention will then become more clearly apparent from the following description of a specific embodiment of the invention given as a non-restrictive example only and represented in the accompanying drawings in which:

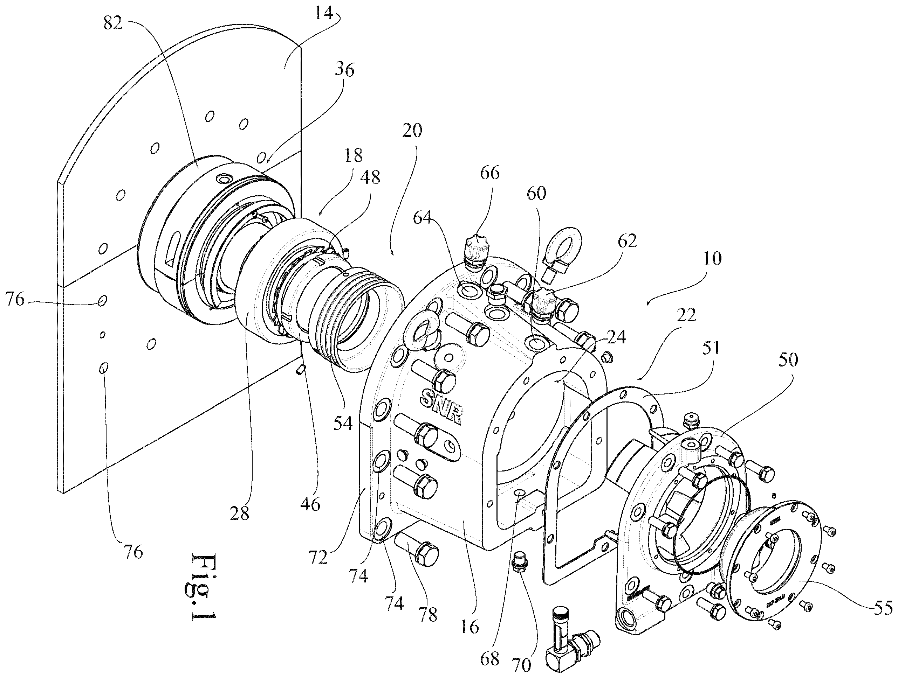

- Fig. 1 is an exploded view of an oil-lubricated bearing assembly according to one embodiment of the invention;

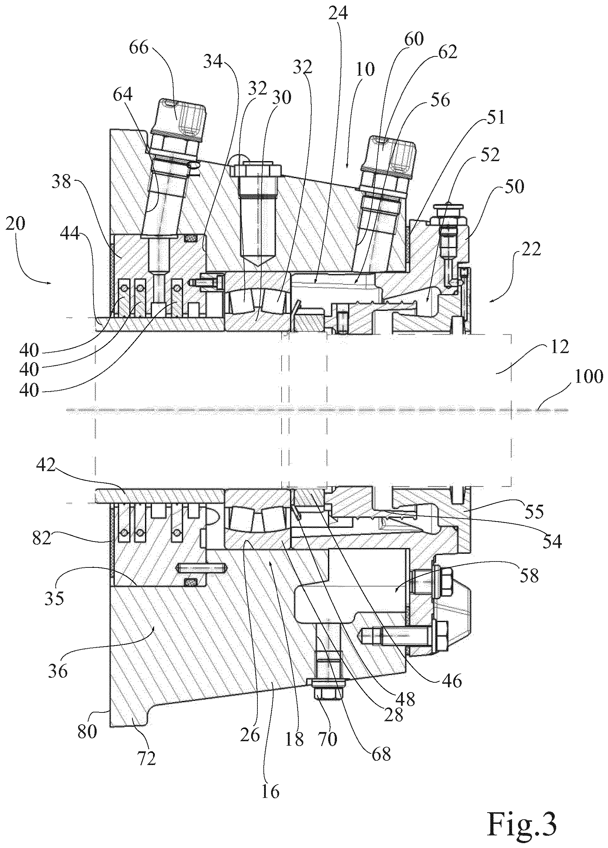

- Fig. 2 is a front view of the oil-lubricated bearing assembly of Fig.1;
- Fig. 3 is a section through lines A-A of Fig. 2;
- Fig. 4 is a section through lines B-B of Fig. 2.

Identical parts shall be identified with identical reference signs in the Figures.

### DETAILED DESCRIPTION OF PREFERRED EMBODIMENTS

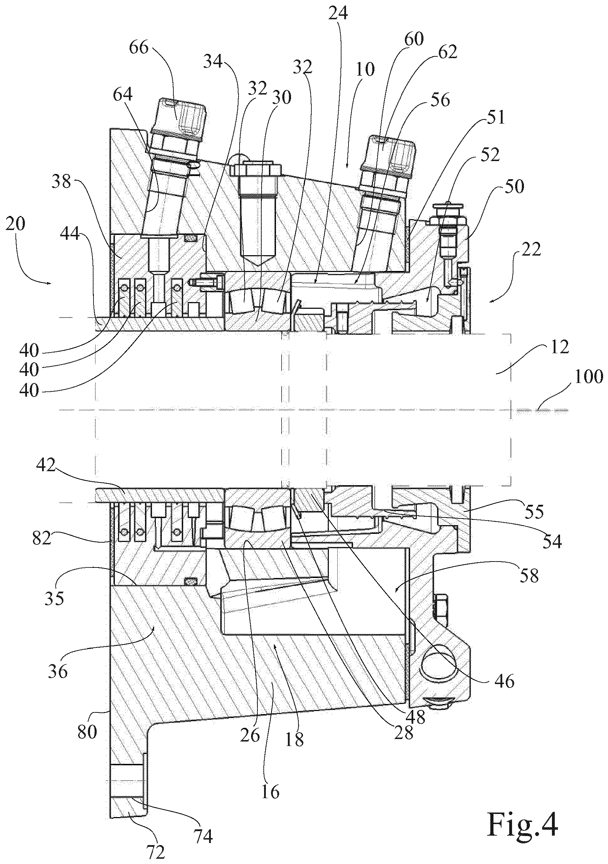

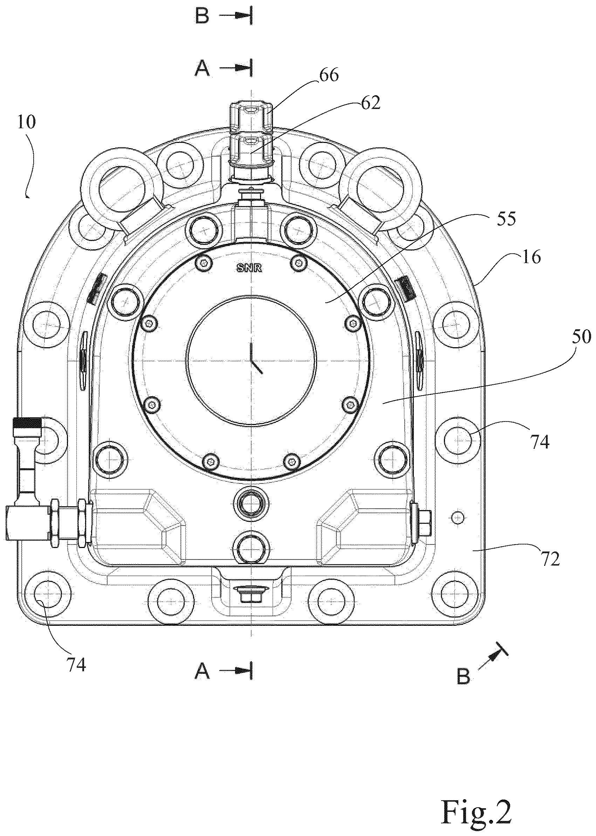

With reference to the Figures, an oil-lubricated bearing assembly **10** for supporting a rotating shaft **12** (Figs. **3** and **4**) with respect to a support member **14,** namely an external wall of a casing of a rotating machine, comprises a tubular housing body **16** made of steel or cast-iron for housing a bearing **18** outside of the casing of the rotating machine. The housing body **16** defines a reference axis **100,** which is intended to be aligned with the revolution axis of the rotating shaft **12.** The housing body **16** has two opposite open axial ends **20, 22** and surrounds an axial through cavity **24** extending between the two axial ends **20, 22.**

The housing body **16** has an annular bearing seat **26** facing radially inwards within the through cavity. The bearing seat **26** is preferably cylindrical. The bearing **18,** which has been illustrated here as a spherical roller bearing, has at least one outer race ring **28** fitted into the bearing seat **26,** an inner race ring **30** force fitted onto the rotating shaft **12** and one or more rows of rolling bodies **32,** here spherical rollers that roll on the races of the outer and inner race rings **28, 30.**

The through cavity **24** is provided with an intermediate shoulder **34** that faces axially towards a first end **(20)** of the two axial ends of the through cavity **24** and forms a recess **35** for accommodating a seal **36** consisting of an annular sealing housing **38,** a number of slip rings **40** made of graphite and a sleeve **42** press-fitted on the rotating shaft **12.** The sleeve **42** bears against a shoulder **44** of the rotating shaft **12.** One axial end face of the inner race ring **30** bears against the sleeve **42.**

At the opposite axial end of the inner race ring **30,** towards a second axial end **22** of the housing body **16,** a lock nut **46** is screwed on the rotating shaft **12** for axially fixing the inner race ring **32.** A lock washer **48** may be inserted between the lock nut **46** and the inner race ring.

The second axial end **22** of the housing body **16** is partially closed by a removable annular housing cover **50.** A static sealing gasket **51** is provided between the housing cover **50** and housing body **16.** A labyrinth seal **52** is formed between a rotating labyrinth seal element **54** fixed to the rotating shaft **12** and a stationary seal element **55** fixed to the housing cover **50.** The two annular seal assemblies **36, 52** define a sealed inner space **56** in which the bearing is located. This sealed annular space **56** also includes a sump **58.** The housing body is provided with a supply hole **60** closed by a vent screw **62** for filing the sealed space **56** with oil and for venting the cavity. A vent hole **64** closed by a vent plug **66** can also be provided for a pressure compensation in the recess **35** receiving the seal **36.** A drain hole **68** closed by a drain plug **70** is also provided below the sump **58.**

The bearing assembly **10** comprises an annular mounting flange **72,** which protrudes radially outwardly from the first end **20** of the housing body **16.** This mounting flange **72** is integral with the housing body **16** and provided with axial through holes **74** that are aligned with corresponding threaded holes **76** in the wall **14** of the machine casing for fixing the housing body **16** to the wall **14** with screws **78.**

The mounting flange **72** has a substantially annular planar surface **80,** which is perpendicular to the reference axis **100** and bears axially against the wall **14.** A static sealing gasket **82** is provided between the seal body **38** and the wall **14** to complete the sealing around the hole in the wall **14** for the shaft **12.**

A number of other variants are possible. The housing body **16** can be made of two parts, in particular to longitudinal parts each extending from one end **20** to the other **22.** The bearing **18** can be of any type, including in particular plain bearings, radial roller bearing, thrust roller bearings, with balls, cylindrical, tapered or spherical rollers. The number of outer and/or inner race rings **28, 30** may vary and the shape of the bearing seat (e.g. cylindrical, tapered or stepped) may be adapted accordingly. The seals **36, 52** can also be of any appropriate type.

The radially extending mounting flange **72** can be axially spaced apart from the open end **20** of the housing body, i.e. between the two ends **20, 22.**

## Claims

1. An oil-lubricated bearing assembly (10) for supporting a rotating shaft (12) with respect to a support member (14), comprising
- a tubular housing body (16) defining a reference axis (100), the housing body (16) surrounding an axial through cavity (24), the housing having an annular bearing seat (26) facing radially inwards within the through cavity (24),
- a bearing (18) received in the through cavity (24) of the housing body (16), the bearing having at least one outer race ring (28) fitted into the bearing seat (26), and
- two annular seal assemblies (36, 52) spaced apart from one another so as to define a sealed inner space (56) between the two annular seal assemblies (36, 52), wherein the inner space includes a sump (58) and the bearing (18) is located within the sealed inner space (56);
- a mounting flange (72) integral with the housing body (16) and protruding radially from the housing body (16), the mounting flange (72) being provided with axial through holes (74) extending in the axial direction for fixing the housing body (16) to a wall (14) of the support member, which extends perpendicularly to the reference axis, and
- a housing cover (50) with a through axial hole, the housing cover (50) being releasibly fixed at an axial open end (22) of the housing body (16), the mounting flange (72) being closer to an opposed axial open end (20) of the housing body (16) than to the housing cover (50), wherein one of the annular seal assemblies (36, 52) is at least partially received within the axial through hole of the housing cover (50),
**characterised in that** the annular bearing seat (26) is located axially between the mounting flange (72) and the sump (58) so that the sump (58) is more remote from the wall of the support member (14) than the bearing (18) when the housing body (16) is fixed to the wall (14) of the support member, and **in that** the sump (58) is formed in the housing body (16) such that an axial end of the sump (58) is closed by the housing cover (50).

2. The oil-lubricated bearing assembly of claim 1, wherein the mounting flange (72) is annular.

3. The oil-lubricated bearing assembly of any one of the preceding claims, wherein the mounting flange (72) has a planar surface (80) perpendicular to the reference axis.

4. The oil-lubricated bearing assembly of any one of the preceding claims, wherein the mounting flange (72) protrudes radially from an axial end (20) of the housing body (16).

5. The oil-lubricated bearing assembly of any one of the preceding claims, wherein at least one of the two annular seal assemblies (36, 52) include a labyrinth seal (52).

6. The oil-lubricating bearing assembly of any one of the preceding claims, wherein at least one of the annular seal assemblies (36, 52) includes a support ring (38) that bears axially against an inner shoulder (34) of the through cavity (24).

7. The oil-lubricated bearing assembly of any one of the preceding claims, wherein the housing body (16) is provided with at least one supply hole (60) for at least partially filling the inner space (56) with oil.

8. The oil-lubricated bearing assembly of any one of the preceding claims, wherein the housing body (16) is in one piece or in two parts, each extending from one axial end to the other.

9. The oil-lubricated bearing assembly of any one of the preceding claims, wherein the housing body (16) is made of steel or cast-iron.

10. A rotating machine comprising a machine casing, a rotating shaft (12) defining a revolution axis of the rotating machine, the rotating shaft (12) extending through a through hole in a wall (14) of the machine casing, **characterised in that** the rotating machine is provided with an oil-lubricated bearing assembly (10) according to one of the preceding claims fixed to the wall (12) the casing, wherein the bearing (18) is mounted on the shaft (12), the mounting flange (72) bears against the wall (14) and fastening elements (78) are engaged in the axial through holes (74) of the mounting flange (72) and in corresponding holes (76) of wall (14) of the machine casing to fix the housing body (16) of the oil-lubricated bearing assembly (10) to the wall (14).

## Patentansprüche

1. Ölgeschmierte Lageranordnung (10) zum Stützen einer rotierenden Welle (12) hinsichtlich eines Stützelements (14), die Folgendes umfasst:
- einen rohrförmigen Gehäusekörper (16), der eine Referenzachse (100) definiert, wobei der Gehäusekörper (16) einen axialen Durchgangshohlraum (24) umgibt, wobei das Gehäuse einen ringförmigen Lagersitz (26) aufweist, der radial nach innen innerhalb des Durchgangshohlraums (24) zeigt,
- ein Lager (18), das in den Durchgangshohlraum (24) des Gehäusekörpers (16) aufgenommen ist, wobei das Lager wenigstens einen äußeren Laufring (28) aufweist, der in den Lagersitz (26) eingepasst ist, und
- zwei ringförmige Dichtungsanordnungen (36, 52), die voneinander beabstandet sind, um einen abgedichteten inneren Raum (56) zwischen den zwei ringförmigen Dichtungsanordnungen (36, 52) zu definieren, wobei der innere Raum eine Ölwanne (58) beinhaltet und sich das Lager (18) innerhalb des abgedichteten inneren Raums (56) befindet;
- einen Montageflansch (72), der in den Gehäusekörper (16) integriert ist und aus dem Gehäusekörper (16) radial hervorsteht, wobei der Montageflansch (72) mit axialen Durchgangslöchern (74) versehen ist, die sich in der axialen Richtung zum Befestigen des Gehäusekörpers (16) an einer Wand (14) des Stützelements erstrecken, das sich senkrecht zu der Referenzachse erstreckt, und
- eine Gehäuseabdeckung (50) mit einem durchgehenden axialen Loch, wobei die Gehäuseabdeckung (50) an einem axialen offenen Ende (22) des Gehäusekörpers (16) lösbar befestigt ist, wobei der Montageflansch (72) näher an einem gegenüberliegenden axialen offenen Ende (20) des Gehäusekörpers (16) als an der Gehäuseabdeckung (50) liegt, wobei eine der ringförmigen Dichtungsanordnungen (36, 52) wenigstens teilweise innerhalb des axialen Durchgangslochs der Gehäuseabdeckung (50) aufgenommen ist,
**dadurch gekennzeichnet, dass** sich der ringförmige Lagersitz (26) axial zwischen dem Montageflansch (72) und der Ölwanne (58) befindet, sodass die Ölwanne (58) weiter von der Wand des Stützelements (14) entfernt als das Lager (18) ist, wenn der Gehäusekörper (16) an der Wand (14) des Stützelements befestigt ist und dadurch, dass die Ölwanne (58) in dem Gehäusekörper (16) derart ausgebildet ist, dass ein axiales Ende der Ölwanne (58) durch die Gehäuseabdeckung (50) verschlossen wird.

2. Ölgeschmierte Lageranordnung nach Anspruch 1, wobei der Montageflansch (72) ringförmig ist.

3. Ölgeschmierte Lageranordnung nach einem der vorhergehenden Ansprüche, wobei der Montageflansch (72) eine ebene Oberfläche (80) senkrecht zu der Referenzachse aufweist.

4. Ölgeschmierte Lageranordnung nach einem der vorhergehenden Ansprüche, wobei der Montageflansch (72) aus einem axialen Ende (20) des Gehäusekörpers (16) radial hervorsteht.

5. Ölgeschmierte Lageranordnung nach einem der vorhergehenden Ansprüche, wobei wenigstens eine der zwei ringförmigen Dichtungsanordnungen (36, 52) eine Labyrinthdichtung (52) beinhaltet.

6. Ölgeschmierte Lageranordnung nach einem der vorhergehenden Ansprüche, wobei wenigstens eine der ringförmigen Dichtungsanordnungen (36, 52) einen Stützring (38) beinhaltet, der an einem inneren Vorsprung (34) des Durchgangshohlraums (24) axial anliegt.

7. Ölgeschmierte Lageranordnung nach einem der vorhergehenden Ansprüche, wobei der Gehäusekörper (16) mit wenigstens einer Zufuhröffnung (60) zum wenigstens teilweisen Auffüllen des inneren Raums (56) mit Öl versehen ist.

8. Ölgeschmierte Lageranordnung nach einem der vorhergehenden Ansprüche, wobei der Gehäusekörper (16) einstückig oder aus zwei Teilen ist, die sich jeweils von einem axialen Ende zu dem anderen erstrecken.

9. Ölgeschmierte Lageranordnung nach einem der vorhergehenden Ansprüche, wobei der Gehäusekörper (16) aus Stahl oder Gusseisen besteht.

10. Rotierende Maschine, die eine Maschinenhülle umfasst, wobei eine rotierende Welle (12) eine Drehungsachse der rotierenden Maschine definiert, wobei sich die rotierende Welle (12) durch ein Durchgangsloch in einer Wand (14) der Maschinenhülle erstreckt, **dadurch gekennzeichnet, dass** die rotierende Maschine mit einer ölgeschmierten Lageranordnung (10) nach einem der vorhergehenden Ansprüche versehen ist, die an der Wand (12) der Hülle befestigt sind, wobei das Lager (18) auf der Welle (12) montiert ist, der Montageflansch (72) an der Wand (14) anliegt und Anbringungselemente (78) in die axialen Durchgangslöcher (74) des Montageflansches (72) und in entsprechende Löcher (76) der Wand (14) der Maschinenhülle in Eingriff genommen sind, um den Gehäusekörper (16) der ölgeschmierten Lageranordnung (10) an der Wand (14) zu befestigen.

## Revendications

1. Ensemble de palier lubrifié à l'huile (10) destiné à soutenir un arbre rotatif (12) par rapport à un élément de support (14), comprenant
- un corps de boîtier tubulaire (16) définissant un axe de référence (100), le corps de boîtier (16) entourant une cavité traversante axiale (24), le boîtier ayant un siège de palier annulaire (26) orienté radialement vers l'intérieur à l'intérieur de la cavité traversante (24),
- un palier (18) reçu dans la cavité traversante (24) du corps de boîtier (16), le palier ayant au moins une bague extérieure (28) montée dans le siège de palier (26), et
- deux ensembles de joint annulaire (36, 52) espacés l'un de l'autre de manière à définir un espace intérieur étanche (56) entre les deux ensembles de joint annulaire (36, 52), dans lequel l'espace intérieur comporte un bassin collecteur (58) et le palier (18) est situé à l'intérieur de l'espace intérieur étanche (56) ;
- une bride de montage (72) solidaire du corps de boîtier (16) et faisant saillie radialement depuis le corps de boîtier (16), la bride de montage (72) étant pourvue de trous traversants axiaux (74) s'étendant dans la direction axiale permettant de fixer le corps de boîtier (16) à une paroi (14) de l'élément de support, qui s'étend perpendiculairement à l'axe de référence, et
- un couvercle de boîtier (50) muni d'un trou axial traversant, le couvercle de boîtier (50) étant fixé de manière amovible à une extrémité axiale ouverte (22) du corps de boîtier (16), la bride de montage (72) étant plus proche d'une ouverture axiale opposée (20) du corps de boîtier (16) que du couvercle de boîtier (50), dans lequel l'un des ensembles de joint annulaire (36, 52) est au moins partiellement reçu dans le trou traversant axial du couvercle de boîtier (50),
**caractérisé en ce que** le siège de palier annulaire (26) est situé axialement entre la bride de montage (72) et le bassin collecteur (58) de sorte que le bassin collecteur (58) est plus éloigné de la paroi de l'élément de support (14) que le palier (18) lorsque le corps de boîtier (16) est fixé à la paroi (14) de l'élément de support, et **en ce que** le bassin collecteur (58) est formé dans le corps de boîtier (16) de telle sorte qu'une extrémité axiale du bassin collecteur (58) est fermée par le couvercle de boîtier (50).

2. Ensemble de palier lubrifié à l'huile selon la revendication 1, dans lequel la bride de montage (72) est annulaire.

3. Ensemble de palier lubrifié à l'huile selon l'une quelconque des revendications précédentes, dans lequel la bride de montage (72) présente une surface plane (80) perpendiculaire à l'axe de référence.

4. Ensemble de palier lubrifié à l'huile selon l'une quelconque des revendications précédentes, dans lequel la bride de montage (72) fait saillie radialement depuis une extrémité axiale (20) du corps de boîtier (16).

5. Ensemble de palier lubrifié à l'huile selon l'une quelconque des revendications précédentes, dans lequel au moins l'un des deux ensembles de joint annulaire (36, 52) comporte un joint à labyrinthe (52).

6. Ensemble de palier lubrifié à l'huile selon l'une quelconque des revendications précédentes, dans lequel au moins l'un des ensembles de joint annulaire (36, 52) comporte une bague de support (38) qui s'appuie axialement contre un épaulement intérieur (34) de la cavité traversante (24).

7. Ensemble de palier lubrifié à l'huile selon l'une quelconque des revendications précédentes, dans lequel le corps de boîtier (16) est pourvu d'au moins un trou d'alimentation (60) pour remplir au moins partiellement l'espace intérieur (56) d'huile.

8. Ensemble de palier lubrifié à l'huile selon l'une quelconque des revendications précédentes, dans lequel le corps de boîtier (16) est en une seule pièce ou en deux parties, chacune s'étendant d'une extrémité axiale à l'autre.

9. Ensemble de palier lubrifié à l'huile selon l'une quelconque des revendications précédentes, dans lequel le corps de boîtier (16) est en acier ou en fonte.

10. Machine rotative comprenant un carter de machine, un arbre rotatif (12) définissant un axe de révolution de la machine rotative, l'arbre rotatif (12) s'étendant à travers un trou traversant dans une paroi (14) du carter de machine, **caractérisée en ce que** la machine rotative est pourvue d'un ensemble de palier lubrifié à l'huile (10) selon l'une des revendications précédentes fixé à la paroi (12) du carter, le palier (18) étant monté sur l'arbre (12), la bride de montage (72) s'appuyant contre la paroi (14) et des éléments de fixation (78) étant mis en prise dans les trous traversants axiaux (74) de la bride de montage (72) et dans les trous correspondants (76) de la paroi (14) du carter de machine afin de fixer le corps de boîtier (16) de l'ensemble de palier lubrifié à l'huile (10) à la paroi (14).
